# EUROPEAN PATENT APPLICATION

(11) **EP 3 042 827 A2**
(43) Date of publication of application: **13.07.2016**
(21) Application number: 16150131.7
(22) Date of filing: 05.01.2016
(51) Int. Cl.: B62D 5/30

(54) **STEERING SYSTEM HAVING DUAL STEERING RATIOS**

(30) Priority: 09.01.2015 US 201514593934
(71) Applicant: Paccar Inc, Bellevue, WA 98004 (US)
(72) Inventor: WHITAKER, Harold M., Jr., Redmond, WA Washington 98052 (US); GROSS, William C., North Bend, WA Washington 98045 (US)
(74) Representative: Gevers Patents

(57) **Abstract**

A power steering system having two or "dual" steering ratios is provided. The power steering system includes a transmission having first and second gear ratios, a steering gear coupled to the transmission, and a power assist coupled to the steering gear for providing power assist to the steering system. In one embodiment, the power steering system is configured to operate with a first steering ratio, such as a "fast" ratio, during normal operating conditions of the steering system (e.g., when power-assist is functional), and is configured to operate with a second steering ratio, such as a "slow" ratio, during abnormal operating conditions of the steering system (e.g., power-assist is non-functional, partially functional, etc.). The second steering ratio of the steering system can provide a fail safe mode for the vehicle operator so that the vehicle can be safely steered to a suitable location (e.g., side of the road, etc.) during abnormal operations conditions of the steering system.

## Description

### BACKGROUND

In cars and trucks alike, a driver "steers" the vehicle via the steering wheel and associated components, sometimes referred to as the steering system. In short, rotation of the steering wheel causes turning of the front wheels via the steering system. Conventional mechanical steering systems generally include a steering mechanism, sometimes referred to as a steering gear, and steering linkages interconnected between the steering wheel and the front wheels of the vehicle in order to transmit rotation of the steering wheel into turning of the front wheels.

One purpose of the steering mechanism is to provide mechanical advantage. In a steering system, the relatively small force applied to the steering wheel by the operator is amplified by the steering mechanism and/or steering linkage to a much larger steering force at the front wheels. This increase in steering force is produced by the steering ratio. The higher the steering ratio (30:1 for example), the easier it is to steer the vehicle, all other things being equal. However, the higher steering ratio, the more the steering wheel has to be turned to achieve steering. Actual steering ratio varies greatly, depending on the type of vehicle and type of operation. High steering ratios are often called slow steering because the steering wheel has to be turned many degrees to produce a small steering effect. Low steering ratios, called fast or quick steering require much less steering wheel movement to produce the desired steering effect. The steering ratio of conventional steering systems is determined by two factors- steering-linkage ratio and the gear ratio in the steering mechanism.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In accordance with an aspect of the present disclosure, a power steering system is provided for a vehicle having a least one steerable ground engaging member. The power steering system includes a steering gear, a power assist unit configured to provide power assist to the power steering system, and a transmission coupled to the steering gear. The transmission is configured in one embodiment to operate either in a first gear ratio or a second, higher gear ratio. In one embodiment, the steering gear and the transmission are cooperatively configured to provide, in part, the power steering system with a first steering ratio when the power assist unit is operating in a normal condition and a second steering ratio when the power assist unit is operation in an abnormal condition.

In accordance with another aspect of the present disclosure, a vehicle steering system is provided having a first steering ratio and a second, higher steering ratio. The system includes steering linkage configured to be connectable to at least ground engaging member, a steering gear having a rotary input and an output coupled to the steering linkage to impart motion to at least one component of the steering linkage, and a transmission having an rotary input adapted to be coupled to a steering wheel and a rotary output coupled to the rotary input of the steering gear. The transmission is one embodiment is configured to be shiftable from a first gear ratio in which the vehicle steering system is configured to operate with the first steering ratio to a second, higher gear ratio, in which the vehicle steering system is configured to operate with the second, higher steering ratio.

In accordance with still another aspect of the present disclosure, a power assisted steering system is provided having a normal operation mode and a fail safe operation mode. The power assisted steering system including a steering gear, a power assist unit configured to provide power assist to the power steering system, and a transmission coupled to the steering gear. The transmission in one embodiment is configured to shift from a first gear ratio and a second, higher gear ratio. In one embodiment, transmission operates in the second gear ratio during the fail safe operation mode.

### DESCRIPTION OF THE DRAWINGS

The foregoing aspects and many of the attendant advantages of the disclosed subject matter will become more readily appreciated as the same become better understood by reference to the following detailed description, when taken in conjunction with the accompanying drawings, wherein:
FIGURE 1 is a schematic representation of one example of a steering system in accordance with an aspect of the present disclosure;
FIGURE 2 is a schematic representation of selected components of one embodiment of the steering system of FIGURE 1;
FIGURE 3 is a schematic representation of selected components of another embodiment of the steering system of FIGURE 1;
FIGURE 4 is a schematic representation of selected components of yet another embodiment of the steering system of FIGURE 1;
FIGURE 5 is a schematic representation of selected components of still yet another embodiment of the steering system of FIGURE 1; and
FIGURE 6 is a schematic representation of another example of a steering system in accordance with an aspect of the present disclosure.

### DETAILED DESCRIPTION

The detailed description set forth below in connection with the appended drawings where like numerals reference like elements is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed. Similarly, any steps described herein may be interchangeable with other steps, or combinations of steps, in order to achieve the same or substantially similar result.

The follow description sets forth examples of steering systems and/or components thereof (e.g., steering linkage, steering gears, etc.) for vehicles, such as light, medium, or heavy trucks, etc. As will be described in more detail below, the examples of the steering systems set forth herein are of the power-assist type. Each example of the steering systems includes two or "dual" steering ratios. In that regard, the steering system is configured to operate with a first steering ratio, such as a "fast" ratio, during normal operating conditions of the steering system (e.g., when power-assist is functional), and is configured to operate with a second steering ratio, such as a "slow" ratio, during abnormal operating conditions of the steering system (e.g., power-assist is non-functional, partially functional, etc.). In one embodiment, the second steering ratio of the steering system provides a fail safe mode for the vehicle operator so that the vehicle can be safely steered to a suitable location (e.g., side of the road, etc.) during abnormal operations conditions of the steering system.

As will be described in more detail below, the steering system can transition from the first steering ratio to the second steering ratio upon an occurrence of an event, such as a decrease or loss of fluid pressure in the power assist or other event trigger, such as decrease in output torque of an electric motor, etc. In some embodiments, the operating condition of the steering system is deemed "normal" when at least a preset percentage (e.g., 30%, 35%, 40%, 45%, 50%, etc.,) of the power assist output, such as hydraulic pressure or output torque, from the power assist is available. In other embodiments, the operating condition of the steering system is deemed "abnormal" when 0% of the power assist output, such as hydraulic pressure, is available. As will be further described below, embodiments of the steering system employ a transmission to increase the steering ratio of the steering system upon abnormal operating conditions of the power assist. The increased steering ratio provides the vehicle operator with a sufficient mechanical advantage so that the vehicle operator can safety steer the vehicle to a suitable location.

In the following description, numerous specific details are set forth in order to provide a thorough understanding of exemplary embodiments of the present disclosure. It will be apparent to one skilled in the art, however, that many embodiments of the present disclosure may be practiced without some or all of the specific details. In some instances, well-known process steps have not been described in detail in order not to unnecessarily obscure various aspects of the present disclosure. Further, it will be appreciated that embodiments of the present disclosure may employ any combination of features described herein.

Although some embodiments of the present disclosure may be described hereinafter with reference to medium or heavy duty trucks, it will be appreciated that aspects of the present disclosure have wide application, and therefore, may be suitable for use with many other vehicles, includes light duty, passenger cars and vans, recreational vehicles, buses, etc. Similarly, aspects of the present disclosure can be practiced with vehicles having ground engaging members other than wheels. Accordingly, the following descriptions and illustrations herein should be considered illustrative in nature, and thus, not limiting the scope of the claimed subject matter.

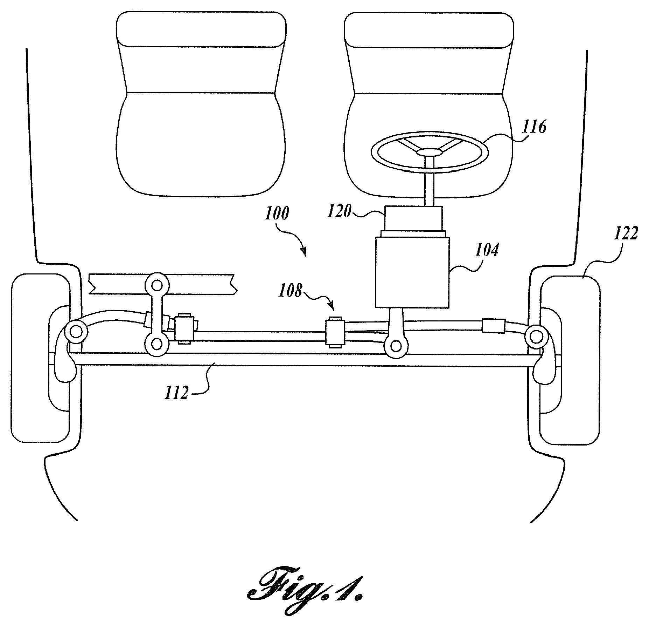

Turning now to FIGURE 1, there is shown one example of a steering system 100 formed in accordance with aspects of the present disclosure. Generally described, the steering system 100 is of the power-assist type and includes a steering gear 104 for controlling steering linkage 108 of a steer axle 112 in response to rotation of the steering wheel 116. As will be described in more detail below, a gearbox-type transmission 120 is associated with the steering gear 104 in order to provide the steering system 100 with two independently distinct steering ratios. The steering ratios in some embodiments can include a "low" steering ratio, sometimes referred to as a "fast" steering ratio (e.g., between about 20:1 to about 10:1 or lower), and a "high" steering ratio, sometimes referred to as a "slow" steering ratio (e.g., between about 20:1 to about 30:1 or greater). In some embodiments, the transmission 120 can be controlled in order to transition the steering system 100 from the "fast" steering ratio to the "slow" steering ratio upon an occurrence of an event (e.g., loss of hydraulic power for power assist, etc.), as will be described in more detail below.

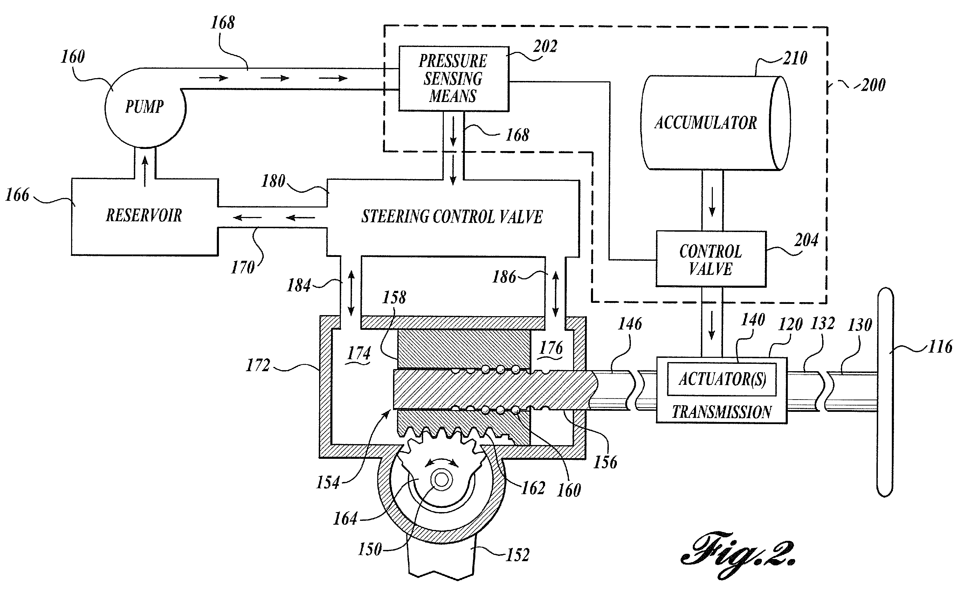

Turning now to FIGURE 2, several components of an embodiment of the steering system 100 will be described in more detail. In the embodiment shown in FIGURE 2, the steering wheel 116 is coupled to an input shaft 132 of the transmission 120 via steering shaft 130, and the output shaft 134 of the transmission 136 is coupled to the steering gear 104. The transmission 120 is configured to provide two discrete gear ratios (i.e., a first fixed gear ratio and a second, fixed gear ratio). Stated differently, the transmission is configured to provide two discrete torque ratios. In one embodiment, the second gear ratio is larger (i.e., higher) than the first gear ratio, and has a value greater than one. As such, when the transmission 120 operates in the second gear ratio, the torque transmitted via the steering wheel is multiplied at the output shaft 134.

In order to carry out this functionality, the transmission 120 includes a suitably configured gear arrangement in the form of a planetary gear set, a straight gear set, or the like, and one or more gear engagement/disengagement devices or couplings, such as for example, clutches, bands, brakes, levers etc. One or more actuators 140 are provided to shift or change gear ratios of the transmission from the first gear ratio to a second, higher gear ratio in several embodiments, and between the first and second gear ratios in other embodiments. The one or more actuators 140 can either be of the mechanical or electrical type, and are associated with the one or more bands, brakes, clutches, levers, etc., as known in the art in order to affect shifting of the transmission 120. As will be described in more detail below, the one or more actuators 140 can be controlled either electronically, mechanically, or both.

In the embodiment shown in FIGURE 2, the output shaft 134 of the transmission 120 is coupled for co-rotation and torque transfer to an input shaft 146 of the steering gear 104. An output shaft 150 of the steering gear 104 is operatively connected to the steer axle 112 (see FIGURE 1), via a pitman arm 152 for example, for turning the front wheels 122. The steering gear 104 in this embodiment is of the recirculating ball type, for effecting rotation of the output shaft 150. In that regard, the steering gear 104 includes a recirculating ball assembly 154 comprised of an actuating shaft 156, a recirculating ball bearing block 158, and a plurality of ball bearings 160. The recirculating ball bearing block 158 is freely movable over the actuating shaft 156, where rotation of the actuating shaft 156 causes the recirculating ball bearing block 158 to move along the actuating shaft 156 in a direction dependent on rotational direction of the actuating shaft 156. The recirculating ball bearing block 158 is formed with a toothed rack 162 on one side, which engages a sector gear 164 fixed for rotation with the output shaft 150. In this embodiment, the output shaft 150 is configured for connection to the pitman arm 152 in a conventional manner. Together, the steering gear 104 and the steering linkage 108 provide a fixed steering ratio that can be increased in some embodiments by operation of the transmission 120.

As briefly stated above, the steering gear 104 is of the power-assist type. To that end, the steering system 100 in one embodiment includes a power assist unit composed of a power steering pump 160. The power steering pump 160 is functionally connected to the internal combustion engine (not shown) of the associated vehicle in a known manner in order to draw fluid from a reservoir 166 and to deliver pressurized fluid to the steering gear 104 via supply line 168. Alternatively, the power steering pump 106 can be operated via an electric motor (not shown) in order to operate as an electro-hydraulic power assist unit. In either case, fluid used by the steering gear 104 is then returned to the reservoir 166 via return line 170. In the embodiment shown in FIGURE 2, the power assist unit also includes a hydraulic motor 172 associated with the steering gear 104. The hydraulic motor 172 is configured to receive pressurized fluid from the power steering pump 160. The hydraulic motor 172 defines first and second sealed hydraulic motor chambers 174 and 176 on either side of the block 158 of the recirculating ball assembly 154. The first and second sealed hydraulic motor chambers 174 and 176 receive pressurized fluid to impart force onto the recirculating ball bearing block 158 to either assist or solely drive the recirculating ball bearing block 158 along the actuating shaft 156. Such movement along the actuation shaft affects movement of the sector gear 164, and thus, the output shaft 150. Rotation of the output shaft 150 causes the pitman arm 152 and connected steering linkage 108 of the steer axle 112 to turn the front wheels 122 (See FIGURE 1).

Power assist from the hydraulic motor 172 can be conventionally controlled via a steering control valve 180. The steering control valve 180 is configured to receive pressurized fluid from the power steering pump 160 via supply line 168, and configured to supply pressurized hydraulic fluid to either the first or second chambers from supply/return lines 184 and 186, respectively, depending on the direction of steering wheel rotation. The steering control valve 180 is further configured to return fluid from the other of the first or second chambers 172 or 174 (via the other of the supply/return lines 184 and 186) to the reservoir 166 via return line 170.

As shown in FIGURE 2, a power assist hydraulic circuit is formed by the pump 160, the reservoir 166, the hydraulic motor 172, the steering control valve 180, and associated lines 168, 170, 184, and 186. It will be appreciated that other configurations of the power assist hydraulic circuit may be practiced with embodiments of the present disclosure. For example, while the circuit of FIGURE 2 depicts a reservoir and pump, other pressurized sources of hydraulic fluid, such as an accumulator and associated components, may be employed.

In one embodiment, the steering control valve 180 may be electrically controlled based on output generated by a steering sensor (not shown), which measures the rotational magnitude and/or direction of the steering wheel 116 or associated shaft 146. In another embodiment, the steering control valve 180 is a conventional rotary valve of the closed center type integrally formed with the steering gear 104. In this latter embodiment, the input shaft 146 of the steering gear 104 is connected to the actuating shaft 156 of the recirculating ball assembly 154 via a torsional bar, as known in the art.

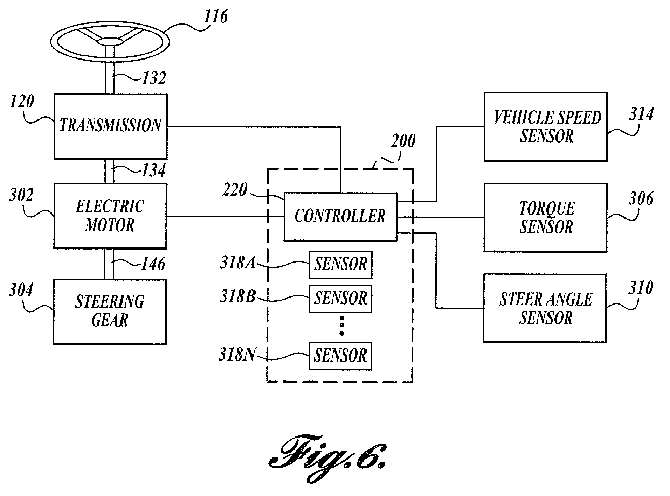

While a steering gear of the recirculating ball-type has been shown in one embodiment of the present disclosure, it will be appreciated that embodiments of the steering system 100 may use any conventional or future developed hydraulic or electro-hydraulic power assisted steering gears, including a power assisted steering gear of the rack and pinion type. Moreover, it will be appreciated that embodiments of the steering system 100 may use any conventional or future developed electric power assisted steering gear or power assist unit of the electric type, as will be described in some detail with regards to FIGURE 6 below. In these and other embodiments, different steer axles, steering linkage, steering components, etc., may be required for such steering gears or power assist units, which can be selected and configured by those skilled in the art.

Still referring to FIGURE 2, the steering system 100 further includes a transmission shift control 200 configured and arranged to shift the transmission 120 from the first gear ratio to the second gear ratio based on, for example, a trigger event. As will be described in more detail below, the trigger event includes, for example, abnormal operating conditions of the power assist unit, such as a drop in pressure or an absence of pressure in the power assist hydraulic circuit. In that regard, the control 200 is capable of controlling the operation of the one or more actuators 140 used to shift the transmission 120 from the first gear ratio to the second, higher gear ratio. In one embodiment, the control 200 employs a mechanical arrangement of shift valves, hydraulic circuits, pumps or accumulators, etc., in order to shift the transmission 120. In another embodiment, the control 200 employs an electrical arrangement of sensors or switches, solenoids, electric motors, etc., in order to shift the transmission 120. In yet another embodiment, the control 200 employs a combination of electrical and mechanical devices, components, etc., in order to shift the transmission 120.

FIGURE 2 illustrates one example of a transmission shift control 200 formed in accordance with aspects of the present disclosure. As shown in FIGURE 2, the control 200 includes a pressure sensing means 202, such as a pressure sensor, a pressure switch, etc., or any other device configured to sense and/or output a trigger indicative of either a reduced pressure condition or zero pressure condition of the power assist hydraulic circuit. In one embodiment, a pressure switch is employed that outputs an electrical signal that is utilized to trigger the transmission shift. In this embodiment, the electrical signal is utilized to control a 2-way solenoid control valve 204. In one embodiment, the control valve 204, when in receipt of the electrical signal from the pressure switch, permits hydraulic fluid under pressure from an accumulator 210 to be supplied to the one or more actuators 140 of the transmission 120 in order to effect shifting of the transmission 120 from the first gear ratio to the second, higher gear ratio. While not shown, the pump 160 can be utilized to charge the accumulator 210, as desired.

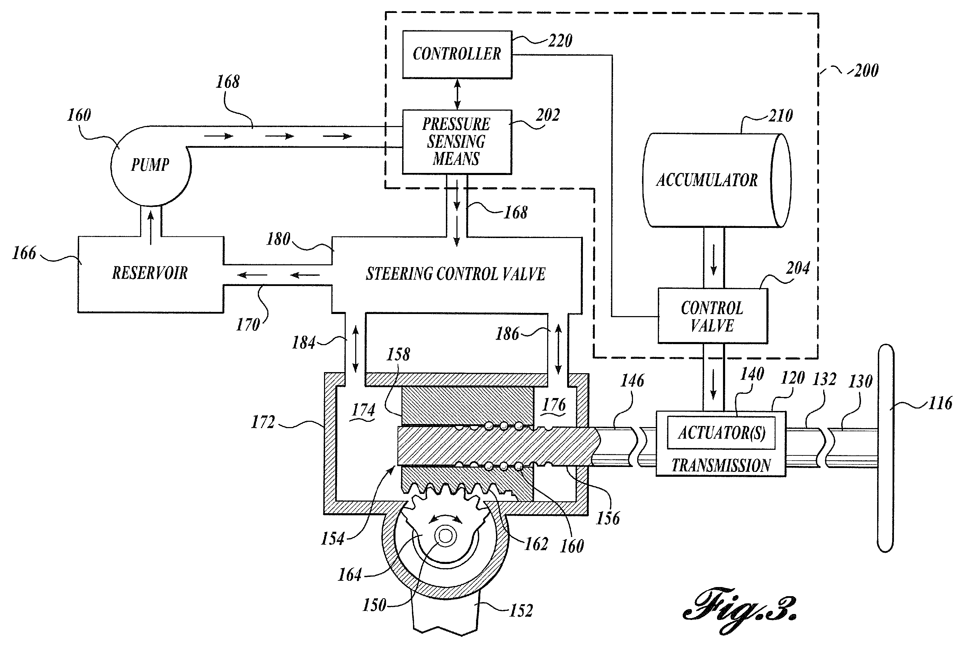

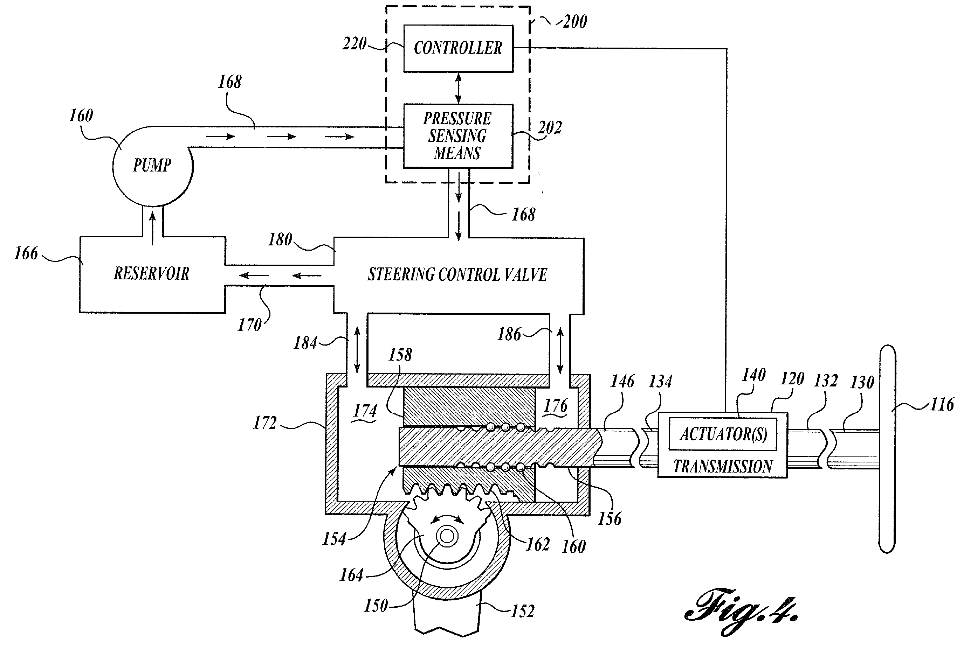

In another embodiment shown in FIGURE 3, the electrical signal generated by the pressure switch 202 can be transmitted to a controller 220. In other embodiments, a pressure sensor can be employed to sense pressure of the power assist hydraulic circuit and output the electrical signal. In either case, the controller 220 is connected in electrical communication with the 2-way solenoid control valve 204, as shown in FIGURE 3. Based on the electrical signal(s) received by the controller 220, the controller 220 is configured to deliver device appropriate control signals to the solenoid control valve 204 in order to activate the one or more actuators 140 and, in turn, shift the transmission 120. In another embodiment, the controller 200 is electrically connected to the one or more actuators 140 of the transmission 120, as shown in FIGURE 4. In this embodiment, based on the electrical signal(s) received by the controller, the controller 220 is configured to deliver device appropriate control signals to the one or more actuators 140, such as electric motors, solenoids, etc., in order to shift the transmission 120.

In each of the above described embodiments of FIGURES 2 and 3, the pressure sensing means 202 is configured such that an electrical signal is generated when sensing the presence of an abnormal operating condition of the steering system. In some embodiments, an abnormal condition can be caused by, for example, pump failure, a broken pump drive belt, leakage in hydraulics lines or at pressure fittings, etc.

In one embodiment, the electrical signal is indicative of a zero pressure condition of the power assist hydraulic circuit. In another embodiment, the electrical signal is indicative of a preset drop in pressure in the power assist hydraulic circuit. In some embodiments, the preset drop in pressure in the power assist hydraulic circuit can be selected as, for example, a 30%, a 40%, a 50%, a 60%, a 70%, or greater, drop in pressure. Depending on the type and configuration, the pressure sensing means 202 can be configured to sense absolute pressure or differential pressure. In other embodiments, the controller 220 can be configured to determine the existence of an abnormal operating condition of the steering system based on the electrical signal(s). For example, the controller 220 in some embodiments is configured to monitor the electrical signals outputted by the pressure sensing means 202, determine a zero-pressure condition or reduction in pressure below a preset value, and output a suitable control signal for controlling the appropriate steering system component.

In some embodiment, the controller 220 includes logic for controlling the solenoid valve 204, the actuation of the one or more actuators 140, etc. It will be appreciated by one skilled in the art that the logic may be implemented in a variety of configurations, including but not limited to, hardware, software, and combinations thereof. In some embodiments, the controller 220 includes a processor and memory, which stores executable instructions used by processor in controlling the operation of the solenoid control valve 204, the one or more actuators 140, etc.

As used herein, the term processor is not limited to integrated circuits referred to in the art as a computer, but broadly refers to a microcontroller, a microcomputer, a microprocessor, a programmable logic controller, an application specific integrated circuit, other programmable circuits, combinations of the above, among others. In one embodiment, the processor executes instructions stored in memory in order to provide suitable control signals to the solenoid valve, the one or more actuators, or to other device level circuitry.

In order to carry out the instructions processed by the processor, the controller 220 in one embodiment includes an input/output (I/O) interface. The I/O interface may include conventional buffers, drivers, relays and the like, for sending device appropriate signals to the solenoid control valve 204, the one or more actuators 140, etc. In doing so, the interface may be implemented in one embodiment as a single integrated interface that provides various raw data or signal conditioning, processing, and/or conversion, short-circuit protection, and/or the like. Alternatively, one or more dedicated hardware or firmware chips may be used to condition and process particular signals before being supplied to the processor. In some embodiments, the signals transmitted from the input/output interface may be any suitable digital or analog signals for controlling the solenoid valve 204, the one or more actuators 140, etc.

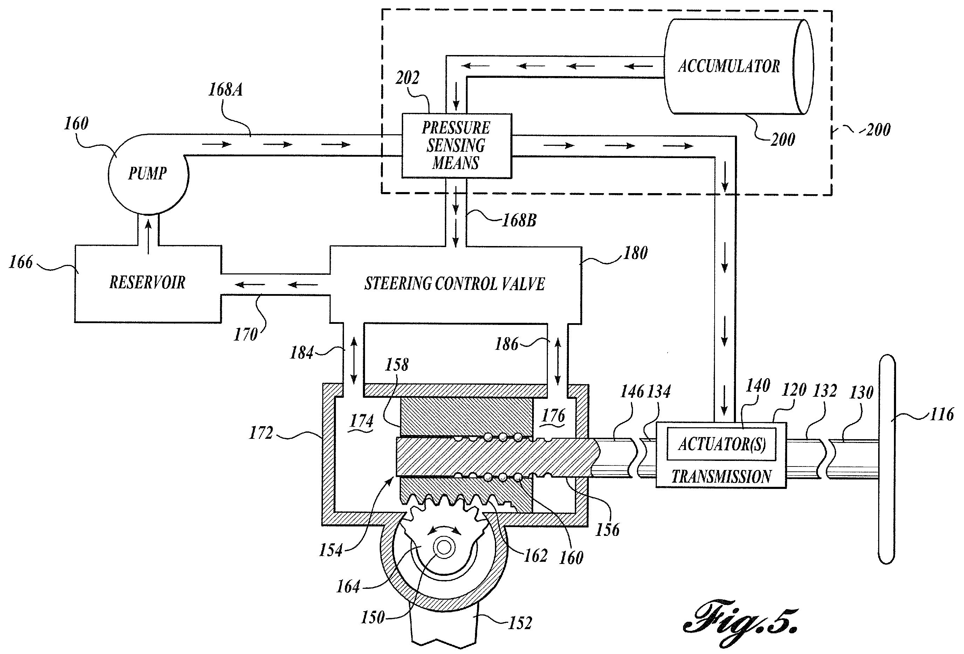

Turning now to FIGURE 5, there is shown another embodiment in which the pressure sensing means 202 includes a pressure valve capable of sensing pressure in power assist hydraulic circuit. As shown in FIGURE 5, the pressure valve is configured to supply hydraulic fluid under pressure to the one or more actuators 140, such as piston rods, levers, etc., when the pressure, for example, in supply line 168 drops, for example, below a threshold level. Supply of hydraulic fluid under pressure to the one or more actuators 140 causes a shift of the transmission 120 from the first gear ratio to the second, higher gear ratio. Again, the threshold level can represent an abnormal operating condition of the power-assist steering system. In some embodiments, the abnormal operating condition can be preset at, for example, a percentage drop (e.g., 30%, 40%, 50%, 60%, 70%, etc.) in pressure in the power assist hydraulic circuit. In one embodiment, this preset can be implemented by selection of the compression spring of the pressure valve.

An operation of a vehicle with a steering system 100 will now be described with reference to FIGURES 1-5. As the vehicle traverses a route, the steering system 100 provides steering functionality to the operator. In that regard, when the power assist feature of the steering system is under normal operating conditions, the transmission 120 operates with a first gear ratio, and together with the steering gear 104 and/or steering linkage 108, provides an overall first steering ratio to the system 100. In one embodiment, the first steering ratio of the system 100 is between about 20:1 and about 10:1 or lower.

As the steering system 100 operates, the pressure sensing means 202 monitors the condition of the power assist unit of the steering system provided by the power assist hydraulic circuit. When the pressure sensing means 202 senses, for example, an abnormal operation condition (e.g., a drop in pressure below a threshold value, a pressure drop greater than threshold value, a zero pressure condition, etc.), the transmission shift control 200 causes the transmission 120 to shift to the second, higher gear ratio. The shift to the second, higher gear ratio causes a multiplying effect on the steering ratio of the steering gear/steering linkage, which results in the steering ratio to the steering system 100 to change from the first steering ratio to second, higher steering ratio. In one embodiment, the second steering ratio of the system 100 is between about 20:1 and about 30:1 or higher. As such, the steering system 100 provides a sufficient mechanical advantage to the vehicle operable in order for the operator to steer the vehicle to a suitable location (e.g., shoulder of a highway, side of the road, etc.). By providing a higher steering ratio for the steering system when, for example, the power assist is operating abnormally, a fail-safe steering mode is provided to the vehicle.

FIGURE 6 illustrates another embodiment of a steering system 300 formed in accordance with an aspect of the present disclosure. The steering system 300 is substantially similar in construction and operation as the steering system 100 of FIGURES 1-5 except for the differences that will now be described in detail.

As described above, the embodiments of the steering system 100 illustrated in FIGURES 1-5 employ either a hydraulic power assist ("HPA") unit or an electro-hydraulic power assist ("EHPA") unit. In the embodiment of FIGURE 6, the steering system employs an electric power assist ("EPA") unit. In other words, an electric motor supplements the torque that the driver applies to the steering wheel 116. As such, the steering system 300 eliminates many components of the steering system 100 such as the hydraulic pump, hoses, fluid, engine drive belt and associated pulleys.

As shown in FIGURE 6, the electric power assist unit of the steering system 300 is of the column-assist type. To that end, the electric power assist unit includes an electric motor 302 mechanically coupled to the input shaft 146 of a steering gear 304 of, for example, the recirculating ball type. In one embodiment, the electric motor 302 is mechanically coupled to the input shaft 146 via a cooperating gear combination, such as a worm drive. The electric power assist unit also includes a torque sensor 306 in communication with a controller, such as controller 220. The electric power assist unit may optionally include a steering angle sensor 310 and/or a vehicle speed sensor 314. In other embodiments, the controller 220 can receive vehicle speed data directly from other vehicle systems or via a CAN. In operation, the controller 220 calculates the assisting power needed based on torque being applied to the steering wheel by the driver, as well as other possible inputs, such as steering wheel position and/or vehicle speed. Once determined, the controller 220 controls the operation of electric motor 302 via device appropriate control signals, which in turn, assists the steering gear 304 with an applied force that reduces the torque required from the driver.

In the embodiment of FIGURE 6, the transmission shift control 200 monitors or senses the presence of an abnormal operating condition of the steering system 300. In some embodiments, an abnormal condition can be caused by, for example, electric motor failure, power delivery failure, sensor failure, etc. As shown in the embodiment of FIGURE 6, the transmission shift control 200 monitors and/or senses the operational condition of the electric power assist unit, including, for example, the electric motor 302, the sensors 306, 310, 314, and/or other associated components. In that regard, the transmission shift control 200 includes one or more sensors 318A-318N that are capable of outputting an indication of abnormal operating conditions of the steering system. The one or more sensors 318A-318N can include but are not limited to load sensors that sense the load on the electric motor 302, torque sensors that sense the output torque of the electric motor 302, voltage sensors or current sensors that sense the power delivery conditions of the system, etc. Additionally or alternatively, the transmission shift control 200 can also monitor and/or sense the working condition of the sensors 306, 310, 314, etc., based on, for example, sensor output values, controller malfunction flags, etc. In one embodiment, output of one or any combination of the sensors 318 can be utilized by the controller 220 to trigger the transmission shift.

While a column assist type EPA unit has been described with embodiments of steering system 300, it will be appreciated that other types of EPA units can be practiced with embodiments of the present disclosure. For example, a pinion assist type or a rack assist type can be used as an alternative to the column assist type described above. In another embodiment, instead of the electric motor 302 being mechanically coupled to the input shaft 146 as shown in FIGURE 6, the electric motor 302 is connected in a suitable manner to either the recirculating block or the sector gear of the steering gear in order to impart torque thereto.

The principles, representative embodiments, and modes of operation of the present disclosure have been described in the foregoing description. However, aspects of the present disclosure which are intended to be protected are not to be construed as limited to the particular embodiments disclosed. Further, the embodiments described herein are to be regarded as illustrative rather than restrictive. It will be appreciated that variations and changes may be made by others, and equivalents employed, without departing from the spirit of the present disclosure. Accordingly, it is expressly intended that all such variations, changes, and equivalents fall within the spirit and scope of the present disclosure.

## Claims

1. A power steering system for a vehicle having a least one steerable ground engaging member, comprising:
a steering gear;
a power assist unit configured to provide power assist to the power steering system;
a transmission coupled to the steering gear, the transmission configured to operate either in a first gear ratio or a second, higher gear ratio,
wherein the steering gear and the transmission are cooperatively configured to provide, in part, the power steering system with a first steering ratio when the power assist unit is operating in a normal condition and a second steering ratio when the power assist unit is operation in an abnormal condition.

2. The power steering system of Claim 1, wherein the power assist unit includes a hydraulic circuit comprising a first source of pressurized fluid, a hydraulic motor associated with the steering gear, and a plurality of hydraulic lines, the hydraulic circuit configured to provide power assist to the power steering system, and wherein the steering gear and the transmission are cooperatively configured to provide, in part, the power steering system with a first steering ratio when sufficiently pressurized fluid is supplied to the steering gear and a second steering ratio when insufficiently pressurized fluid is supplied to the steering gear.

3. The power steering system of Claim 2, wherein the insufficiently pressurized fluid is equal to a drop in pressure within the hydraulic circuit by a preset amount.

4. The power steering system of Claim 3, wherein the preset amount is selected from a group consisting of 20% or greater, 30% or greater, 40% or greater, 50% or greater, 60% or greater, 70% or greater.

5. The power steering system of Claim 3, wherein insufficiently pressurized fluid is equal to a state of zero pressure within the hydraulic circuit.

6. The power steering system of Claim 2, further comprising a pressure sensing means for sensing pressure of the hydraulic circuit, wherein the transmission is configured to shift from the first gear ratio to the second, higher gear ratio based on the sensed pressure by the pressure sensing means.

7. The power steering system of Claim 1, further comprising a transmission shift control configured to monitor the operational condition of the power assist unit, wherein the power assist unit includes an electric motor, and wherein the transmission shift control monitors the operational characteristics of the electric motor.

8. The power steering system of Claim 2, further comprising a transmission shift control configured to monitor the pressure of the hydraulic circuit and to effect a shifting of the transmission from the first gear ratio to the second gear ratio.

9. The power steering system of Claim 8, wherein configured to effect shifting of the transmission includes generation of a signal based on the operating characteristics of the hydraulic circuit, wherein the generated signal is indicative of a drop in pressure within the hydraulic circuit greater than a preset value.

10. The power steering system of Claim 6, wherein the pressure sensing means includes a pressure valve disposed in fluid communication between the steering gear and the first source of pressurized fluid, and further disposed in fluid communication between a second source of pressurized fluid and the transmission, wherein the pressure valve has at least two operating states, including: (1) a first state that directs pressurized fluid from the steering pump to the steering gear; (2) a second state that directs pressurized fluid from the second source of pressurized fluid to the transmission.

11. A vehicle steering system having a first steering ratio and a second, higher steering ratio, comprising:
steering linkage configured to be connectable to at least ground engaging member;
a steering gear having a rotary input and an output coupled to the steering linkage to impart motion to at least one component of the steering linkage; and
a transmission having an rotary input adapted to be coupled to a steering wheel and a rotary output coupled to the rotary input of the steering gear, wherein the transmission is configured to be shiftable from a first gear ratio in which the vehicle steering system is configured to operate with the first steering ratio to a second, higher gear ratio, in which the vehicle steering system is configured to operate with the second, higher steering ratio.

12. A power assisted steering system having a normal operation mode, and a fail safe operation mode, the power assisted steering system comprising:
a steering gear;
a power assist unit configured to provide power assist to the power steering system; and
a transmission coupled to the steering gear, wherein the transmission is configured to shift from a first gear ratio and a second, higher gear ratio, and wherein the transmission operates in the second gear ratio during the fail safe operation mode.

13. The power assisted steering system of Claim 12, further comprising:
a transmission shift control configured to monitor the pressure of a hydraulic circuit of the power assist unit and to control shifting of the transmission from the first gear ratio to the second, higher gear ratio based on the pressure of the hydraulic circuit.

14. The power assisted steering system of Claim 13, wherein to transmission shift control includes a software component, a hardware component, or combinations thereof, to control the shifting of the transmission.

15. The power assisted steering system of Claim 14, further comprising
a transmission shift control configured to monitor operating characteristics of the power assist unit and to control shifting of the transmission from the first gear ratio to the second, higher gear ratio based on the operating characteristics of the power assist unit.
